(19) Europäisches Patentamt

European Patent Office

Office européen des brevets

(11) **EP 3 859 185 B1**

(12) # EUROPÄISCHE PATENTSCHRIFT

(45) Veröffentlichungstag und Bekanntmachung des Hinweises auf die Patenterteilung:
**04.09.2024  Patentblatt 2024/36**

(21) Anmeldenummer: **21153196.7**

(22) Anmeldetag: **25.01.2021**

(51) Internationale Patentklassifikation (IPC):
*F16D 66/00* *(2006.01)*

(52) Gemeinsame Patentklassifikation (CPC):
**F16D 66/00**

(54) **VERFAHREN ZUR BESTIMMUNG VON REIBUNGSZUSTÄNDEN FÜR EINE BREMSE**

METHOD FOR DETERMINING FRICTION STATES FOR A BRAKE

PROCÉDÉ DE DÉTERMINATION DES ÉTATS DE FRICTION POUR UN FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2020  AT 500722020**

(43) Veröffentlichungstag der Anmeldung:
**04.08.2021  Patentblatt 2021/31**

(73) Patentinhaber: **Siemens Mobility Austria GmbH 1210 Wien (AT)**

(72) Erfinder: **Kleinschuster, Christoph 8010 Graz (AT)**

(74) Vertreter: **Siemens Patent Attorneys Postfach 22 16 34 80506 München (DE)**

(56) Entgegenhaltungen:
WO-A1-2005/058665    DE-A1- 10 029 238
DE-A1- 102006 015 034

**EP 3 859 185 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung von Reibungskoeffizienten zwischen Reibpartnern einer Bremse, wobei die Reibungskoeffizienten aus Relativgeschwindigkeiten zwischen den Reibpartnern, Temperaturen im Kontakt zwischen den Reibpartnern und experimentell bestimmten Konstanten ermittelt werden.

Eine genaue Ermittlung von Reibungskoeffizienten zwischen Reibpartnern einer Bremse (z.B. zwischen einem Bremsbelag und einer Bremsscheibe einer Rad- oder Wellenscheibenbremse oder zwischen einem Bremsklotz und einem Rad bei einer Klotzbremse) ist insbesondere bei Schienenfahrzeugen wichtig, um Bremswege (z.B. vor einem einen erforderlichen Halt anzeigenden Hauptsignal) mit möglichst geringem Fehler bestimmen zu können.

Reibungskoeffizienten zwischen Reibpartnern hängen von einer Vielzahl von Einflussfaktoren, im Wesentlichen von Werkstoffeigenschaften der Reibpartner und Eigenschaften einer Zwischenschicht zwischen den Reibpartnern ab. Hierbei sind auch Relativgeschwindigkeiten und Drücke bzw. Flächenpressungen zwischen den Reibpartnern, Kontakttemperaturen der Reibpartner, eine etwaige Benetzung der Reibpartner mit Flüssigkeit etc. zu nennen.

Aus dem Stand der Technik ist die DE 10 2016 115 275 A1 bekannt, in welcher eine Diagnoseeinrichtung und ein Diagnoseverfahren einer Fahrzeugbremse beschrieben sind. Die Diagnoseeinrichtung weist Sensoren zum Erfassen von Relativgeschwindigkeiten zwischen einer Bremsscheibe und einem Bremsbelag sowie zur Messung von Umgebungstemperaturen der Fahrzeugbremse auf. Weiterhin sind eine Einrichtung zur Bestimmung von Normalkräften zwischen der Bremsscheibe und dem Bremsbelag sowie Recheneinheiten zur Bestimmung von

Reibungskoeffizienten zwischen der Bremsscheibe und dem Bremsbelag sowie zur Bestimmung von Bremsscheibenreibflächentemperaturen vorgesehen.

Die Reibungskoeffizienten werden gemäß des in der DE 10 2016 115 275 A1 offenbarten Verfahrens mittels einer Bildungsvorschrift aus den Relativgeschwindigkeiten, den Bremsscheibenreibflächentemperaturen, den Normalkräften sowie experimentell bestimmten Konstanten ermittelt.

Dieser Ansatz weist in seiner bekannten Form den Nachteil auf, dass zur Ermittlung der Reibungskoeffizienten mittels des Diagnoseverfahrens Normalkräfte zwischen der Bremsscheibe und dem Bremsbelag bestimmt werden.

Weiterhin zeigt die WO 2005/058665 A1 ein Verfahren zur Schätzung von Reibungskoeffizienten bei einer Bremse, wobei Temperaturen gemessen und Beziehungen zwischen thermischen Energien und absorbierten Bremsenergien gebildet werden.

Der Erfindung liegt die Aufgabe zugrunde, ein gegenüber dem Stand der Technik weiterentwickeltes Verfahren zur Bestimmung von Reibungskoeffizienten auf Grundlage einer möglichst geringen Anzahl von laufend zu erfassenden physikalischen Parametern anzugeben.

Erfindungsgemäß wird diese Aufgabe gelöst mit einem Verfahren der eingangs genannten Art, bei dem die Reibungskoeffizienten aus Summanden mit einem ersten Zähler und einem zweiten Zähler ermittelt werden, wobei die Konstanten vorab aus Versuchen auf einem Bremsenprüfstand oder aus Bremsmessfahrten mit einem Referenzfahrzeug ermittelt werden und die Versuche oder Bremsmessfahrten mit definierten Anpresskräften eines ersten Reibpartners gegen einen zweiten Reibpartner durchgeführt werden, wobei die Konstanten über Vergleiche von aus den Versuchen oder Bremsmessfahrten ermittelten Versuchsreibungskoeffizienten mit aus den Summanden gebildeten Polynomen n-ten Grades, wobei dem ersten Zähler Werte von null bis n und dem zweiten Zähler Werte von null bis n zugeordnet werden und wobei in die Summanden für die Relativgeschwindigkeiten aus den Versuchen oder Bremsmessfahrten ermittelte Relativgeschwindigkeitswerte sowie für die Temperaturen Temperaturmesswerte oder Temperaturwerte aus einer Temperatursimulation eingesetzt werden, ermittelt werden.

In die Polynome n-ten Grades zur Ermittlung der Reibungskoeffizienten werden lediglich die Relativgeschwindigkeiten, die Temperaturen sowie die experimentell ermittelten Konstanten eingesetzt. Ein Einsetzen von Normalkräften zwischen dem ersten Reibpartner und dem zweiten Reibpartner in die Polynome ist nicht erforderlich. Dadurch wird der Vorteil erzielt, dass die Versuche oder Bremsmessfahrten zur Bestimmung der Konstanten zwar mit definierten Anpresskräften durchgeführt werden müssen, für die beispielsweise betrieblich, an Bord eines Fahrzeugs durchgeführte Ermittlung der Reibungskoeffizienten jedoch keine Erfassungsvorgänge und keine Sensorik zur Bestimmung von Anpresskräften erforderlich sind.

Wird für die Ermittlung der Reibungskoeffizienten auch auf eine Messung der Temperaturen verzichtet, d.h. werden in die Polynome statt Temperaturmesswerten simulierte Temperaturwerte eingesetzt, so sind für eine Ermittlung der Reibungskoeffizienten keine Sensoren erforderlich, wodurch eine weitere Vereinfachung erzielt wird. Es ist dann lediglich eine Recheneinrichtung erforderlich, in welcher die Reibungskoeffizienten auf Basis von Relativgeschwindigkeiten und Temperaturen sowie der vorab bestimmten Konstanten ermittelt werden. Für die Temperatursimulation zur Ermittlung der Temperaturen werden bei einer pneumatischen Bremse beispielsweise Bremsdruckinformationen eingesetzt. Diese Bremsdruckinformationen können bei Schienenfahrzeugen beispielsweise zusammen mit zur Bestimmung der Relativgeschwindigkeiten erforderlichen Fahrgeschwindigkeitsinformationen aus einem Multifunction Vehicle Bus des Fahrzeugs ausgelesen werden.

Das erfindungsgemäße Verfahren eignet sich daher auch für einen Einsatz in Bestandsfahrzeugen, da erforderliche Umrüstungsaufwendungen gering sind.

Vorteilhafte Ausgestaltungen der Erfindung ergeben sich aus den Unteransprüchen.

Hilfreich kann es beispielsweise sein, wenn die Reibungskoeffizienten mittels einer Recheneinrichtung an Bord eines Fahrzeugs während eines Betriebs des Fahrzeugs aus Polynomen n-ten Grades ermittelt werden, wobei dem ersten Zähler Werte von null bis n und dem zweiten Zähler Werte von null bis n zugeordnet werden, wobei in die Summanden für die Konstanten jene mittels der Versuche oder der Bremsmessfahrten ermittelten Werte, für die Relativgeschwindigkeiten betrieblich ermittelte Relativgeschwindigkeitswerte sowie für die Temperaturen Temperaturmesswerte oder Temperaturwerte aus einer Temperatursimulation eingesetzt werden.

Durch diese Maßnahme wird ermöglicht, Bremsungen des Fahrzeugs auf Grundlage der betrieblich ermittelten Reibungskoeffizienten zu steuern oder zu regeln, d.h. z.B. Bremsdrücke in Abhängigkeit der ermittelten Reibungskoeffizienten zu erhöhen oder abzusenken. Hierdurch werden eine hohe Betriebssicherheit sowie ruckarme und somit komfortable Bremsvorgänge des Fahrzeugs erzielt.

Eine vorteilhafte Ausgestaltung erhält man, wenn die Polynome einen Grad von n gleich fünf aufweisen.

Durch diese Maßnahme wird eine hohe Präzision bei der Ermittlung der Reibungskoeffizienten erreicht, wodurch wiederum eine genaue Bestimmung und Einhaltung von Bremswegen des Fahrzeugs bewirkt wird.

Es ist günstig, wenn die Relativgeschwindigkeiten jeweils aus einer Momentanrelativgeschwindigkeit, aus einem Relativgeschwindigkeitsmittelwert über eine definierte Anzahl an Relativgeschwindigkeitswerten sowie aus einer Relativgeschwindigkeitsstandardabweichung über die definierte Anzahl an Relativgeschwindigkeitswerten als normierte Relativgeschwindigkeiten ermittelt werden.

Weiterhin ist es vorteilhaft, wenn die Temperaturen jeweils aus einer Momentantemperatur, aus einem Temperaturmittelwert über eine definierte Anzahl an Temperaturwerten sowie aus einer Temperaturstandardabweichung über die definierte Anzahl an Temperaturwerten als normierte Temperaturen ermittelt werden.

Durch eine derartige Normierung von Eingabewerten wird deren Varianz verringert.

Eine vorteilhafte Lösung wird erzielt, wenn Wertebereiche für die Relativgeschwindigkeiten und für die Temperaturen mittels zumindest einer ersten Geraden begrenzt werden, wobei ein erster Parameter und ein zweiter Parameter aus während der Versuche oder der Bremsmessfahrten erfassten

Relativgeschwindigkeitswerten und Werten für die Temperaturen, welche aus Messungen während der Versuche oder der Bremsmessfahrten oder aus einer Temperatursimulation ermittelt werden, ermittelt werden.

Darüber hinaus ist es günstig, wenn Wertebereiche für die Relativgeschwindigkeiten mittels zumindest einer Grenzrelativgeschwindigkeit begrenzt werden.

Ferner ist es hilfreich, wenn Wertebereiche für die Temperaturen mittels zumindest einer Grenztemperatur begrenzt werden.

Dadurch wird vermieden, dass Werte für die Relativgeschwindigkeiten und Temperaturen verarbeitet werden, welche außerhalb von für die Versuche oder Bremsmessfahrten festgelegten Wertebereichen liegen und somit mit großer Wahrscheinlichkeit keine validen Ergebnisse für die Reibungskoeffizienten ergeben.

Es ist günstig, wenn Bremsungen des Fahrzeugs in Abhängigkeit der ermittelten Reibungskoeffizienten gesteuert oder geregelt werden.

Durch diese Maßnahme werden Risiken im Hinblick auf Bremswegüberschreitungen verringert und ein Bremskomfort gesteigert.

Nachfolgend wird die Erfindung anhand von Ausführungsbeispielen näher erläutert.

Es zeigen beispielhaft:

Fig. 1:     Eine schematische Darstellung einer Wellenscheibenbremse mit einer Wellenbremsscheibe und einem Bremsbelag,

Fig. 2:     Eine schematische Darstellung einer Klotzbremse mit einem Rad und einem Bremsklotz,

Fig. 3:     Ein Flussdiagramm einer beispielhaften Ausführungsvariante eines erfindungsgemäßen Verfahrens,

Fig. 4:     Ein Ergebnisdiagramm zu einer beispielhaften Ausführungsvariante eines erfindungsgemäßen Verfahrens mit mittels Geraden begrenztem Wertebereich, und

Fig. 5:     Ein Schienenfahrzeug mit einer Recheneinrichtung in einem Wagenkasten, welche mit einem Multifunction Vehicle Bus und einer Bremsvorrichtung verbunden ist.

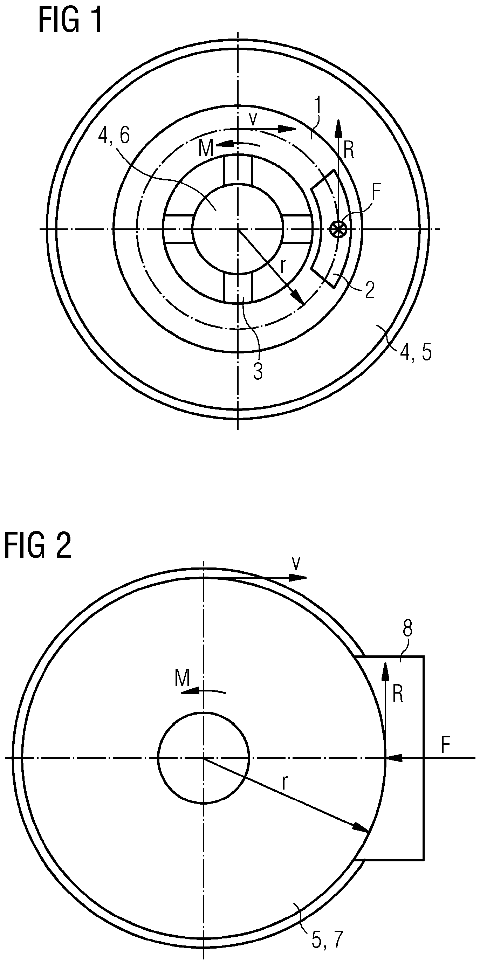

Fig. 1 zeigt eine Wellenscheibenbremse eines Schienenfahrzeugs mit einer Wellenbremsscheibe 1 und einem Bremsbelag 2 als Reibpartner in schematischer Darstellung. Die Wellenbremsscheibe 1 ist über eine Nabe 3 fest mit einem Radsatz 4, wobei von dem Radsatz 4 in Fig. 1 ein Rad 5 und eine Radsatzwelle 6 sichtbar sind, verbunden.

Mittels eines nicht gezeigten Bremsaktuators, welcher mit einem ebenfalls nicht dargestellten Fahrwerksrahmen verbunden ist und einen Bremszylinder mit einem Kolben sowie ein Gestänge aufweist, wird für eine Bremsung des Schienenfahrzeugs über Erhöhung eines Luftdrucks in dem Bremszylinder eine Kolbenkraft erzeugt und über den Kolben und das Gestänge auf den Bremsbelag 2 übertragen. Zwischen dem Bremsbelag 2 und der Wellenbremsscheibe 1 wirkt während einer Bremsung eine Anpresskraft F, welche wiederum, über einen Zusammenhang

$$R = \mu \cdot F$$

mit einem Reibungskoeffizienten $\mu$ eine Reibkraft R zwischen der Wellenbremsscheibe 1 und dem Bremsbelag 2 bewirkt. Über einen weiteren Zusammenhang

$$M = R \cdot r$$

mit der Reibkraft R und einem Reibradius r wird ein Bremsmoment M auf die Wellenbremsscheibe 1 erzeugt. Im Kontakt zwischen der Wellenbremsscheibe 1 und dem Bremsbelag 2 herrscht eine sich im Verlauf der Bremsung verändernde Temperatur T.

Die Wellenbremsscheibe 1 weist eine Umfangs- bzw. Tangentialgeschwindigkeit auf, welche einer Relativgeschwindigkeit v bzw. Gleitgeschwindigkeit zwischen der Wellenbremsscheibe 1 und dem Bremsbelag 2 entspricht.

In Fig. 2 ist eine Klotzbremse eines Fahrwerks 7 eines Schienenfahrzeugs in schematischer Darstellung offenbart, wobei ein Rad 5 und ein Bremsklotz 8 als Reibpartner fungieren.

Mittels eines Bremsaktuators, welcher mit einem Fahrwerksrahmen verbunden ist und einen Bremszylinder mit einem Kolben sowie ein Gestänge aufweist, wird für eine Bremsung des Schienenfahrzeugs über Erhöhung eines Luftdrucks in dem Bremszylinder eine Kolbenkraft erzeugt und über den Kolben und das Gestänge auf den Bremsklotz 8 übertragen. Zwischen dem Bremsklotz 8 und dem Rad 5 wirkt während einer Bremsung eine Anpresskraft F, welche wiederum, wie im Zusammenhang mit Fig. 1 beschrieben, in Abhängigkeit eines Reibungskoeffizienten $\mu$ eine Reibkraft R zwischen dem Rad 5 und dem Bremsklotz 8 bewirkt. Über einen auch in Fig. 1 beschriebenen Zusammenhang mit der Reibkraft R und einem Reibradius r wird ein Bremsmoment M auf das Rad 5 erzeugt. Im Kontakt zwischen dem Rad 5 und dem Bremsklotz 8 herrscht eine sich im Verlauf der Bremsung verändernde Temperatur T. Das Rad 5 weist eine Umfangsgeschwindigkeit auf, welche einer Relativgeschwindigkeit v bzw. Gleitgeschwindigkeit zwischen dem Rad 5 und dem Bremsklotz 8 entspricht.

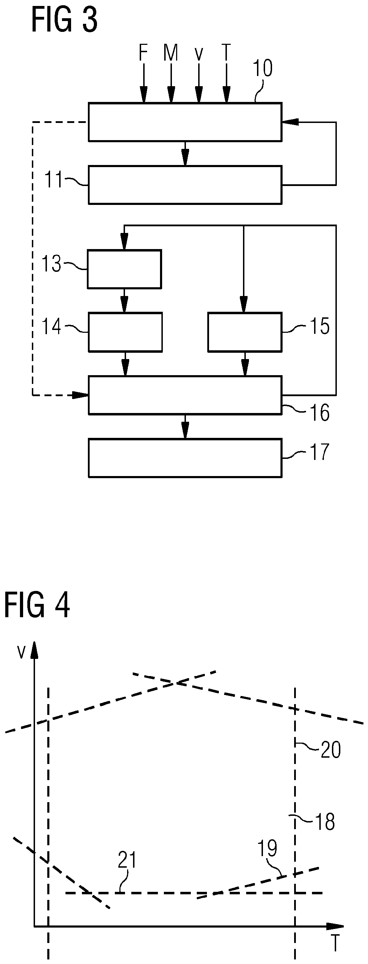

In Fig. 3 ist eine beispielhafte Ausführungsvariante eines erfindungsgemäßen Verfahrens zur Bestimmung von Reibungszuständen einer Bremse eines Schienenfahrzeugs als Flussdiagramm gezeigt, wie sie beispielsweise in Fig. 1 und in Fig. 2 dargestellt ist.

In dieser beispielhaften Ausführungsvariante eines erfindungsgemäßen Verfahrens werden Reibungskoeffizienten p zwischen einem ersten Reibpartner und einem zweiten Reibpartner aus Relativgeschwindigkeiten v zwischen den Reibpartnern, Temperaturen T im Kontakt zwischen dem ersten Reibpartner und dem zweiten Reibpartner sowie experimentell bestimmten Konstanten p ermittelt.

Diese Konstanten p werden vorab, zeitlich und örtlich unabhängig von einer Ermittlung der Reibungskoeffizienten p bestimmt.

Hierzu werden Versuche auf einem aus dem Stand der Technik bekannten Bremsenprüfstand (Dynamometer) einer pneumatischen Reibungsbremse mit definierten Anpresskräften F des als Bremsbelag 2, welcher in Fig. 1 dargestellt ist, ausgeführten ersten Reibpartners gegen den als Wellenbremsscheibe 1, welche ebenfalls in Fig. 1 gezeigt ist, ausgeführten zweiten Reibpartner, durchgeführt.

Erfindungsgemäß ist es jedoch auch denkbar, die Konstanten p und die Reibungskoeffizienten $\mu$ für eine Klotzbremse, wobei als erster Reibpartner z.B. ein Bremsklotz 8 gemäß Fig. 2 und als zweiter Reibpartner z.B. ein Rad 5 gemäß Fig. 2 fungiert, zu ermitteln.

Weiterhin ist es denkbar, das Verfahren für eine Radscheibenbremse durchzuführen.

Der Bremsenprüfstand ist mit Temperaturschleifkontakten ausgerüstet, womit Temperaturen T im Kontakt zwischen dem ersten Reibpartner und dem zweiten Reibpartner während der Versuche gemessen werden.

Erfindungsgemäß ist es jedoch auch vorstellbar, die für eine Ermittlung der Konstanten p erforderlichen Temperaturen T mittels einer aus dem Stand der Technik bekannten Temperatursimulation, wobei Kontakttemperaturen zwischen dem ersten Reibpartner und dem zweiten Reibpartner beispielsweise über eine eindimensionale Wärmeleitungsgleichung bestimmt werden, zu ermitteln.

Bremsmomente M werden über Messung von drehmomentproportionalen Motorströmen des Bremsenprüfstands und über Mittelung über einen jeweiligen Bremsversuch erfasst.

Die Anpresskräfte F werden über Vorgabe bzw. Messung von Luftdrücken in einem Bremszylinder eines Bremsaktuators und Umrechnung auf Bremszylinderkolbenkräfte, Bremsgestängekräfte sowie Bremsbelagkräfte (über entsprechende Übersetzungsfaktoren und Wirkungsgrade) definiert bzw. ermittelt und überprüft.

Die Relativgeschwindigkeiten v bzw. Gleitgeschwindigkeiten zwischen dem ersten Reibpartner und dem zweiten Reibpartner sind Umfangs- bzw. Tangentialgeschwindigkeiten der Wellenbremsscheibe 1 und werden aus Drehzahlen des Bremsenprüfstands bzw. aus Winkelgeschwindigkeiten der Wellenbremsscheibe 1 über aus dem Stand der Technik bekannte kinematische Zusammenhänge zwischen Drehzahlen, Winkelgeschwindigkeiten und Umfangs- bzw. Tangentialgeschwindigkeiten ermittelt.

Erfindungsgemäß ist es alternativ auch vorstellbar, die Konstanten p aus Bremsmessfahrten mit einem Referenzfahrzeug zu ermitteln. Hierbei muss jedoch sichergestellt sein, dass entsprechende Eingabegrößen (Bremsmomente M, Anpresskräfte F, Relativgeschwindigkeiten v und Temperaturen T) auf dem Referenzfahrzeug vorgegeben bzw. erfasst werden können und entsprechende Sensoren vorgesehen sind.

Beispielsweise können die Bremsmomente M auf dem Referenzfahrzeug über Dehnmessstreifen an einer Nabe 3 der Wellenbremsscheibe 1 gemessen werden. Entsprechende Fahrgeschwindigkeiten und Bremsdrücke können aus einem Multifunction Vehicle Bus 9 des Referenzfahrzeugs ausgelesen werden und in die Relativgeschwindigkeiten v und Anpresskräfte F transformiert werden.

Erforderliche Mess- und Auswerteverfahren sind aus dem Stand der Technik bekannt.

Die Versuche oder die Bremsmessfahrten bezüglich des ersten Reibpartners und des zweiten Reibpartners werden für verschiedene Anpresskräfte F und definierte Bremsausgangsgeschwindigkeiten durchgeführt.

Aus den Anpresskräften F, den Bremsmomenten M und einem Reibradius r, welcher im Zusammenhang mit Fig. 1 und Fig. 2 beschrieben ist und als theoretischer Wert willkürlich gewählt wird, werden Versuchsreibungskoeffizienten $\mu_V$ mit

$$\mu_V = \frac{M}{F \cdot r}$$

mittels Umformens aus einem Zusammenhang

$$\mu_V \cdot F \cdot r = R \cdot r = M$$

ermittelt, wobei eine Reibkraft R auch im Zusammenhang mit Fig. 1 und Fig. 2 beschrieben ist.

Wird das erfindungsgemäße Verfahren für eine Klotzbremse durchgeführt, so wird als Reibradius r ein Radius eines Rads 5 eingesetzt.

Weiterhin werden Parametersätze für die Konstanten p vorgewählt und in Flächenpolynome mit Grad n = 5 eingesetzt. Diese Flächenpolynome werden aus Summanden

$$s = p_{ij} v^i T^j$$

mit einem ersten Zähler i und einem zweiten Zähler j ermittelt, wobei dem ersten Zähler i und dem zweiten Zähler j jeweils Werte von 0 bis n = 5 zugeordnet werden.

Eine erste Bildungsvorschrift zur Ermittlung der Reibungskoeffizienten $\mu$ lautet somit

$$\begin{aligned}\mu = {} & p_{00} v^0 T^0 + p_{10} v^1 T^0 + p_{01} v^0 T^1 + p_{20} v^2 T^0 + p_{11} v^1 T^1 + p_{02} v^0 T^2 + p_{30} v^3 T^0 \\ & + p_{21} v^2 T^1 + p_{12} v^1 T^2 + p_{03} v^0 T^3 + p_{40} v^4 T^0 + p_{31} v^3 T^1 + p_{22} v^2 T^2 \\ & + p_{13} v^1 T^3 + p_{04} v^0 T^4 + p_{50} v^5 T^0 + p_{41} v^4 T^1 + p_{32} v^3 T^2 + p_{23} v^2 T^3 \\ & + p_{14} v^1 T^4 + p_{05} v^0 T^5\end{aligned}$$

Erfindungsgemäß ist es jedoch auch vorstellbar, dass die Flächenpolynome beispielsweise einen geringeren Grad n aufweisen, wodurch die Ermittlung von Reibungskoeffizienten p auch bei geringen Rechenkapazitäten möglich ist. Der Grad n des Flächenpolynoms wird in Abhängigkeit eines Bedarfs an Rechengenauigkeit und einer verfügbaren Rechenkapazität gewählt.

Vorgewählte Parametersätze für die Konstanten p, Anpresskräften F zugeordnete, über einen jeweiligen Bremsversuch gemittelte Temperaturmesswerte für die Temperaturen T sowie ausgehend von den Bremsausgangsgeschwindigkeiten ermittelte und über den jeweiligen Bremsversuch gemittelte Relativgeschwindigkeiten v werden für jeden Wert der Anpresskraft F in die erste Bildungsvorschrift eingesetzt und entsprechende Ergebnisse werden mit den mit dem Reibradius r multiplizierten Versuchsreibungskoeffizienten $\mu_V$ mittels Differenzbildung verglichen (Vergleiche 10). Hierbei wird folgender Differenzzusammenhang D angesetzt:

$$\begin{aligned} D = {} & p_{00}v^0T^0 + p_{10}v^1T^0 + p_{01}v^0T^1 + p_{20}v^2T^0 + p_{11}v^1T^1 + p_{02}v^0T^2 + p_{30}v^3T^0 \\ & + p_{21}v^2T^1 + p_{12}v^1T^2 + p_{03}v^0T^3 + p_{40}v^4T^0 + p_{31}v^3T^1 + p_{22}v^2T^2 \\ & + p_{13}v^1T^3 + p_{04}v^0T^4 + p_{50}v^5T^0 + p_{41}v^4T^1 + p_{32}v^3T^2 + p_{23}v^2T^3 \\ & + p_{14}v^1T^4 + p_{05}v^0T^5 - \frac{M}{F} \end{aligned}$$

Erfindungsgemäß ist es jedoch auch vorstellbar, dass die Versuchsreibungskoeffizienten $\mu_V$ für die Vergleiche 10 nicht mit dem Reibradius r multipliziert werden, d.h. der willkürlich gewählte Wert des Reibradius r in den Differenzzusammenhang D eingesetzt wird.

Die Konstanten p werden iterativ mittels eines aus dem Stand der Technik bekannten Newton-Verfahrens zur numerischen Lösung nichtlinearer Gleichungssysteme ermittelt.

Die Größe des Gleichungssystems bzw. die Anzahl von Gleichungen in den Vergleichen 10 richtet sich nach der Anzahl der zu bestimmenden Konstanten p. In jener für diese beispielhafte Ausführungsvariante eines erfindungsgemäßen Verfahrens angesetzten ersten Bildungsvorschrift sind einundzwanzig Konstanten p vorgesehen, weshalb auch einundzwanzig Gleichungen, d.h. einundzwanzig oben dargestellte Differenzzusammenhänge D, zur Bestimmung der Konstanten p erforderlich sind.

Diese einundzwanzig Differenzzusammenhänge D werden aufgestellt, indem die Versuche zur Bestimmung der Konstanten p mit einundzwanzig verschiedenen Werten für die Anpresskraft F durchgeführt werden und Mittelwerte für die im jeweiligen Versuch gemessenen Temperaturen T und ermittelten Relativgeschwindigkeiten v gebildet werden. Für jeden Differenzzusammenhang D ist also ein Versuch erforderlich. In jeden der einundzwanzig Differenzzusammenhänge D wird folglich eine Anpresskraft F, ein Bremsmoment M, eine Relativgeschwindigkeit v und eine Temperatur T eingesetzt, welche dem jeweiligen Versuch zugeordnet sind.

In einer Iteration werden die Konstanten p für jeden Vergleich 10 variiert, d.h. es werden für jeden Vergleich 10 verschiedene Parametersätze für die Konstanten p in die einundzwanzig Differenzzusammenhänge D eingesetzt. Die in die einundzwanzig Differenzzusammenhänge D eingesetzten Anpresskräfte F, Bremsmomente M, Relativgeschwindigkeiten v und Temperaturen T werden in der Iteration beibehalten.

Nach jedem Vergleich 10 erfolgt also eine Parametervariation 11 (z.B. eine Vergrößerung oder Verkleinerung der einzelnen Konstanten p) bezüglich der Konstanten p.

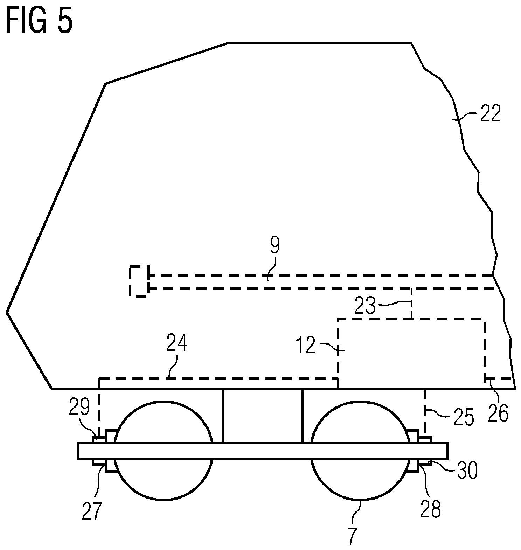

Jener Parametersatz für die Konstanten p, welcher die geringsten Differenzen in den genannten Differenzzusammenhängen D zeigt, wird ausgewählt und an eine beispielsweise in Fig. 5 dargestellte Recheneinrichtung 12 eines Fahrzeugs übertragen.

In dieser Recheneinrichtung 12 erfolgt, zeitlich und örtlich von der Ermittlung der Konstanten p getrennt, eine laufende Ermittlung der Reibungskoeffizienten $\mu$ einer Wellenscheibenbremse während eines Betriebs bzw. während Bremsungen des Fahrzeugs.

Hierzu wird betrieblich und laufend eine Fahrgeschwindigkeitserfassung 13 über einen Multifunction Vehicle Bus 9 des Fahrzeugs und, über aus dem Stand der Technik bekannte kinematische Zusammenhänge, eine Relativgeschwindigkeitsermittlung 14 durchgeführt.

Weiterhin erfolgt laufend eine Temperaturerfassung 15 über ein in der Recheneinrichtung 12 installiertes, aus dem Stand der Technik bekanntes Temperatursimulationsprogramm, in welchem Temperaturen T zwischen dem ersten Reibpartner und dem zweiten Reibpartner mittels einer ebenfalls aus dem Stand der Technik bekannten, eindimensionalen Wärmeleitungsgleichung ermittelt werden.

Erfindungsgemäß ist es jedoch auch denkbar, die Temperaturerfassung 15 auf Basis von Temperaturmessungen durchzuführen, wofür die Wellenscheibenbremse des Fahrzeugs jedoch mit Temperatursensoren (z.B. Temperaturschleifkontakten) ausgerüstet sein muss.

Mit den Konstanten p sowie entsprechend erfassten und/oder ermittelten Werten für die Relativgeschwindigkeit v und die Temperatur T wird laufend eine Reibungskoeffizientenbestimmung 16 mittels der ersten Bildungsvorschrift durchgeführt. Die Recheneinrichtung 12 ist als Bremssteuergerät des Fahrzeugs ausgebildet.

Das Bremssteuergerät steuert Bremsungen des Fahrzeugs in Abhängigkeit der ermittelten Reibungskoeffizienten p kontinuierlich (Bremsbeeinflussung 17). Beispielsweise wird ein Bremsdruck in einem pneumatischen Bremszylinder der Wellenscheibenbremse erhöht, wenn der ermittelte Reibungskoeffizient $\mu$ geringer als ein entsprechender Nominalwert ist und gesenkt, wenn der ermittelte Reibungskoeffizient $\mu$ größer als der Nominalwert ist. Erfindungsgemäß ist es auch vorstellbar, dass die Reibungskoeffizientenbestimmung 16 in einer von dem Bremssteuergerät getrennten Einrichtung erfolgt und eine Datenübertragung in das Bremssteuergerät erfolgt. Weiterhin ist es denkbar, dass die

Reibungskoeffizientenbestimmung 16 in einem Bremsregler oder in einer Gleitschutzeinrichtung des Fahrzeugs durchgeführt wird.

Ferner ist es vorstellbar, dass die Reibungskoeffizientenbestimmung 16 nicht in dem Fahrzeug, sondern in einem Leitstand, einer Betriebszentrale etc. erfolgt oder zur Auslegung und Dimensionierung des ersten Reibpartners und des zweiten Reibpartners eingesetzt wird.

Erfindungsgemäß ist es darüber hinaus möglich, dass eine Normierung der Relativgeschwindigkeiten v und der Temperaturen T bezüglich definierter Relativgeschwindigkeitsintervalle und definierter Temperaturintervalle erfolgt, d.h. dass diese als normierte Relativgeschwindigkeiten v und normierte Temperaturen T in die Ermittlung der Konstanten p und in die Reibungskoeffizientenbestimmung 16 eingesetzt werden. Hierzu werden die Relativgeschwindigkeiten v jeweils mittels einer zweiten Bildungsvorschrift

$$\text{v} = \frac{v_M - v^-}{\sigma_v}$$

aus einer Momentanrelativgeschwindigkeit $v_M$, aus einem Relativgeschwindigkeitsmittelwert $v^-$ über eine definierte Anzahl an Relativgeschwindigkeitswerten sowie aus einer Relativgeschwindigkeitsstandardabweichung $\sigma_v$ über die definierte Anzahl an Relativgeschwindigkeitswerten ermittelt.

Weiterhin werden hierzu die die Temperaturen T jeweils mittels einer dritten Bildungsvorschrift

$$\text{T} = \frac{T_M - T^-}{\sigma_T}$$

aus einer Momentantemperatur $T_M$, aus einem Temperaturmittelwert $T^-$ über eine definierte Anzahl an Temperaturwerten sowie aus einer Temperaturstandardabweichung $\sigma_T$ über die definierte Anzahl an Temperaturwerten ermittelt. Fig. 4 zeigt ein Ergebnisdiagramm jener beispielhaften Ausführungsvariante eines erfindungsgemäßen Verfahrens zur Bestimmung von Reibungszuständen einer Fahrzeugbremse, die im Zusammenhang mit Fig. 3 beschrieben ist.

Eine Abszisse des Ergebnisdiagramms zeigt Temperaturen T, eine Ordinate Relativgeschwindigkeiten v. Ein Wertebereich 18 für Paarungen aus den Temperaturen T und den Relativgeschwindigkeiten v, aus welchen gemeinsam mit entsprechend ermittelten Konstanten p nach einer im Zusammenhang mit Fig. 3 erläuterten ersten Bildungsvorschrift Reibungskoeffizienten $\mu$ ermittelt werden, ist mittels einer ersten Geraden 19, einer zweiten Geraden 20, einer dritten Geraden 21 sowie weiteren Geraden begrenzt.

Die erste Gerade 19 ist definiert durch

$$\text{v}_{G1} = \text{k} \cdot \text{T} + \text{d}$$

wobei $v_{G1}$ eine temperaturabhängige, erste Grenzrelativgeschwindigkeit ist und ein erster Parameter k sowie ein zweiter Parameter d aus während im Zusammenhang mit Fig. 3 beschriebenen Versuchen oder Bremsmessfahrten erfassten Relativgeschwindigkeitswerten und Werten für die Temperaturen T, welche aus Messungen während der Versuche oder der Bremsmessfahrten oder aus einer Temperatursimulation ermittelt werden, bestimmt werden. Zur Bestimmung des ersten Parameters k und des zweiten Parameters d sind zwei Gleichungen, d.h. zwei Paarungen aus Relativgeschwindigkeiten v und Temperaturen T, d.h. zwei Bremsversuche erforderlich.

Die zweite Gerade 20 ist definiert durch

$$T = T_G$$

wobei eine Grenztemperatur $T_G$ die höchste während der Versuche oder Bremsmessfahrten erfasste Temperatur T ist.

Die dritte Gerade 21 ist definiert durch

$$v = v_{G2}$$

wobei eine zweite Grenzrelativgeschwindigkeit $v_{G2}$ die geringste während der Versuche oder Bremsmessfahrten erfasste bzw. ermittelte Relativgeschwindigkeit v ist.

Die erste Gerade 19, die zweite Gerade 20, die dritte Gerade 21 sowie die weiteren Geraden umgrenzen also ein während der Versuche oder der Bremsmessfahrten aufgetretenes Relativgeschwindigkeits-Temperaturspektrum.

Bei einer Reibungskoeffizientenbestimmung 16 gemäß Fig. 3 wird durch Eingrenzung des Wertebereichs 18 verhindert, dass Paarungen von Relativgeschwindigkeiten v und Temperaturen T angesetzt werden, welche außerhalb des während der Versuche oder der Bremsmessfahrten aufgetretenen Relativgeschwindigkeits-Temperaturspektrums liegen.

Fig. 5 zeigt ein Schienenfahrzeug mit einer als Bremssteuergerät ausgebildeten Recheneinrichtung 12 in einem Wagenkasten 22, welche über eine erste Signalleitung 23 mit einem Multifunction Vehicle Bus 9 und einer als erste Klotzbremse 27 und zweite Klotzbremse 28 ausgeführten pneumatischen Bremsvorrichtung eines Fahrwerks 7 verbunden ist.

Die Recheneinrichtung 12 ist über eine zweite Signalleitung 24 mit der ersten Klotzbremse 27 und über eine dritte Signalleitung 25 mit der zweiten Klotzbremse 28 verbunden.

In der Recheneinrichtung 12 wird eine Reibungskoeffizientenbestimmung 16 auf Basis von vorab ermittelten Konstanten p gemäß Fig. 3 durchgeführt.

Die Recheneinrichtung 12 bzw. das Bremssteuergerät steuert Bremsungen des Schienenfahrzeugs in Abhängigkeit der ermittelten Reibungskoeffizienten $\mu$. Dabei wird die erste Klotzbremse 27 über die zweite Signalleitung 24 und die zweite Klotzbremse 28 über die dritte Signalleitung 25 angesteuert. Entsprechende, von dem Bremssteuergerät gebildete elektronische Steuersignale werden dabei in pneumatische Bremssignale umgewandelt, über welche Drücke in einem ersten Bremszylinder 29 der ersten Klotzbremse 27 und in einem zweiten Bremszylinder 30 der zweiten Klotzbremse 28 eingestellt werden.

Die erste Klotzbremse 27 und die zweite Klotzbremse 28 werden in einer Weise gesteuert oder geregelt, dass eine während einer Bremsung auftretende Verzögerung konstant bleibt.

Die Recheneinrichtung 12 bzw. das Bremssteuergerät ist weiterhin über eine vierte Signalleitung 26 mit einer in Fig. 5 nicht sichtbaren pneumatischen Wellenscheibenbremse des Schienenfahrzeugs verbunden, wobei für diese Wellenscheibenbremse eine eigene Reibungskoeffizientenbestimmung 16 auf Basis von eigens für die Wellenscheibenbremse vorab ermittelten Konstanten p sowie eine eigene Bremsbeeinflussung 17 gemäß Fig. 3 durchgeführt werden.

Liste der Bezeichnungen

1 Wellenbremsscheibe
2 Bremsbelag
3 Nabe
4 Radsatz
5 Rad
6 Radsatzwelle
7 Fahrwerk
8 Bremsklotz
9 Multifunction Vehicle Bus
10 Vergleich
11 Parametervariation
12 Recheneinrichtung
13 Fahrgeschwindigkeitserfassung
14 Relativgeschwindigkeitsermittlung
15 Temperaturerfassung
16 Reibungskoeffizientenbestimmung
17 Bremsbeeinflussung
18 Wertebereich
19 Erste Gerade
20 Zweite Gerade
21 Dritte Gerade
22 Wagenkasten
23 Erste Signalleitung
24 Zweite Signalleitung
25 Dritte Signalleitung
26 Vierte Signalleitung

27    Erste Klotzbremse
28    Zweite Klotzbremse
29    Erster Bremszylinder
30    Zweiter Bremszylinder

F     Anpresskraft
p     Reibungskoeffizient
R     Reibkraft
r     Reibradius
M     Bremsmoment
T     Temperatur
v     Relativgeschwindigkeit
p     Konstante
$\mu_V$    Versuchsreibungskoeffizient
n     Grad
s     Summand
i     Erster Zähler
j     Zweiter Zähler
D     Differenzzusammenhang
$v_M$    Momentanrelativgeschwindigkeit
$v^-$    Relativgeschwindigkeitsmittelwert
$\sigma_v$    Relativgeschwindigkeitsstandardabweichung
$T_M$    Momentantemperatur
$T^-$    Temperaturmittelwert
$\sigma_T$    Temperaturstandardabweichung
$v_{G1}$    Erste Grenzrelativgeschwindigkeit
$v_{G2}$    Zweite Grenzrelativgeschwindigkeit
k     Erster Parameter
d     Zweiter Parameter


**Patentansprüche**

**1.** Verfahren zur Bestimmung von Reibungskoeffizienten zwischen Reibpartnern einer Bremse, wobei die Reibungskoeffizienten aus Relativgeschwindigkeiten v zwischen den Reibpartnern, Temperaturen T im Kontakt zwischen den Reibpartnern und experimentell bestimmten Konstanten p ermittelt werden, **dadurch gekennzeichnet, dass** die Reibungskoeffizienten ($\mu$) aus Summanden $s = p_{ij}v^iT^j$ mit einem ersten Zähler i und einem zweiten Zähler j ermittelt werden, wobei die Konstanten p vorab aus Versuchen auf einem Bremsenprüfstand oder aus Bremsmessfahrten mit einem Referenzfahrzeug ermittelt werden und die Versuche oder Bremsmessfahrten mit definierten Anpresskräften (F) eines ersten Reibpartners gegen einen zweiten Reibpartner durchgeführt werden, wobei die Konstanten p über Vergleiche (10) von aus den Versuchen oder Bremsmessfahrten ermittelten Versuchsreibungs-koeffizienten ($\mu_V$) mit aus den Summanden s gebildeten Polynomen n-ten Grades, wobei dem ersten Zähler i Werte von null bis n und dem zweiten Zähler j Werte von null bis n zugeordnet werden und wobei in die Summanden s für die Relativgeschwindigkeiten v aus den Versuchen oder Bremsmessfahrten ermittelte Relativgeschwindigkeitswerte sowie für die Temperaturen T Temperaturmesswerte oder Temperaturwerte aus einer Temperatursimulation eingesetzt werden, ermittelt werden.

**2.** Verfahren nach Anspruch 1, **dadurch gekennzeichnet, dass** die Reibungskoeffizienten ($\mu$) mittels einer Rechen-einrichtung (12) an Bord eines Fahrzeugs während eines Betriebs des Fahrzeugs aus Polynomen n-ten Grades ermittelt werden, wobei dem ersten Zähler (i) Werte von null bis n und dem zweiten Zähler (j) Werte von null bis n zugeordnet werden, wobei in die Summanden (s) für die Konstanten (p) jene mittels der Versuche oder der Bremsmessfahrten ermittelten Werte, für die Relativgeschwindigkeiten (v) betrieblich ermittelte Relativgeschwindigkeitswerte sowie für die Temperaturen (T) Temperaturmesswerte oder Temperaturwerte aus einer Temperatursimulation eingesetzt werden.

**3.** Verfahren nach Anspruch 1 oder 2, **dadurch gekennzeichnet, dass** die Polynome einen Grad von n gleich fünf aufweisen.

4. Verfahren nach Anspruch 3, **dadurch gekennzeichnet, dass** die Reibungskoeffizienten ($\mu$) mittels einer ersten Bildungsvorschrift $\mu = p_{00}v^0T^0 + p_{10}v^1T^0 + p_{01}v^0T^1 + p_{20}v^2T^0 + p_{11}v^1T^1 + p_{02}v^0T^2 + p_{30}v^3T^0 + p_{21}v^2T^1 + p_{12}v^1T^2 + p_{03}v^0T^3 + p_{40}v^4T^0 + p_{31}v^3T^1 + p_{22}v^2T^2 + p_{13}v^1T^3 + p_{04}v^0T^4 + p_{50}v^5T^0 + p_{41}v^4T^1 + p_{32}v^3T^2 + p_{23}v^2T^3 + p_{14}v^1T^4 + p_{05}v^0T^5$ ermittelt werden.

5. Verfahren nach einem der Ansprüche 1 bis 4, **dadurch gekennzeichnet, dass** die Relativgeschwindigkeiten (v) jeweils mittels einer zweiten Bildungsvorschrift $v = \dfrac{v_M - \bar{v}}{\sigma_v}$ aus einer Momentanrelativgeschwindigkeit $v_M$, aus einem Relativgeschwindigkeitsmittelwert $\bar{v}$ über eine definierte Anzahl an Relativgeschwindigkeitswerten sowie aus einer Relativgeschwindigkeitsstandardabweichung $\sigma_v$ über die definierte Anzahl an Relativgeschwindigkeitswerten als normierte Relativgeschwindigkeiten v ermittelt werden.

6. Verfahren nach einem der Ansprüche 1 bis 5, **dadurch gekennzeichnet, dass** die Temperaturen T jeweils mittels einer dritten Bildungsvorschrift $T = \dfrac{T_M - \bar{T}}{\sigma_T}$ aus einer Momentantemperatur $T_M$ aus einem Temperaturmittelwert $\bar{T}$ über eine definierte Anzahl an Temperaturwerten sowie aus einer Temperaturstandardabweichung $\sigma_T$ über die definierte Anzahl an Temperaturwerten als normierte Temperaturen T ermittelt werden.

7. Verfahren nach einem der Ansprüche 1 bis 6, **dadurch gekennzeichnet, dass** Wertebereiche (18) für die Relativgeschwindigkeiten v und für die Temperaturen T mittels zumindest einer ersten Geraden (19), definiert durch eine vierte Bildungsvorschrift $v_{G1} = k \cdot T + d$ für eine erste Grenzrelativgeschwindigkeit G1, begrenzt werden, wobei ein erster Parameter k und ein zweiter Parameter d aus während der Versuche oder der Bremsmessfahrten erfassten Relativgeschwindigkeitswerten und Werten für die Temperaturen T, welche aus Messungen während der Versuche oder der Bremsmessfahrten oder aus einer Temperatursimulation ermittelt werden, ermittelt werden.

8. Verfahren nach einem der Ansprüche 1 bis 7, **dadurch gekennzeichnet, dass** Wertebereiche (18) für die Relativgeschwindigkeiten (v) mittels zumindest einer zweiten Grenzrelativgeschwindigkeit ($v_{G2}$) begrenzt werden.

9. Verfahren nach einem der Ansprüche 1 bis 8, **dadurch gekennzeichnet, dass** Wertebereiche (18) für die Temperaturen (T) mittels zumindest einer Grenztemperatur ($T_G$) begrenzt werden.

10. Verfahren nach einem der Ansprüche 2 bis 9, **dadurch gekennzeichnet, dass** Bremsungen des Fahrzeugs in Abhängigkeit der ermittelten Reibungskoeffizienten ($\mu$) gesteuert oder geregelt werden.

11. Verfahren nach Anspruch 10, **dadurch gekennzeichnet, dass** die Bremsungen des Fahrzeugs mit einer konstanten Verzögerung gesteuert oder geregelt werden.

**Claims**

1. Method for determining coefficients of friction between friction partners of a brake, wherein the coefficients of friction are ascertained from relative velocities v between the friction partners, temperatures T during contact between the friction partners and constants p determined by experiments, **characterised in that** the coefficients of friction ($\mu$) are ascertained from summands $s = p_{ij}v^iT^j$ with a first counter i and a second counter j, wherein the constants p are ascertained in advance from trials on a brake test rig or from brake measurement runs with a reference vehicle and the trials or brake measurement runs are performed with defined contact forces (F) of a first friction partner against a second friction partner, wherein the constants p are ascertained via comparisons (10) of trial coefficients of friction ($\mu_v$), ascertained from the trials or brake measurement runs, with nth-degree polynomials formed from the summands s, wherein the first counter i is assigned values from zero to n and the second counter j is assigned values from zero to n and wherein, in the summands s, relative velocity values ascertained from the trials or brake measurement runs are used for the relative velocities v and temperature measurement values or temperature values from a temperature simulation are used for the temperatures T.

2. Method according to claim 1, **characterised in that** the coefficients of friction ($\mu$) are ascertained from nth-degree polynomials by means of a computing facility (12) on board a vehicle during operation of the vehicle, wherein the first counter (i) is assigned values from zero to n and the second counter (j) is assigned values from zero to n, wherein, in the summands (s), the values ascertained by means of the trials or the brake measurement runs are used for the constants (p), relative velocity values ascertained during operation are used for the relative velocities (v) and temperature measurement values or temperature values from a temperature simulation are used for the temperatures (T).

3. Method according to claim 1 or 2, **characterised in that** the polynomials have a degree of n equal to 5.

4. Method according to claim 3, **characterised in that** the coefficients of friction ($\mu$) are ascertained by means of a first formation rule $\mu = p_{00}v^0T^0 + p_{10}v^1T^0 + p_{01}v^0T^1 + p_{20}v^2T^0 + p_{11}v^1T^1 + p_{02}v^0T^2 + p_{30}v^3T^0 + p_{21}v^2T^1 + p_{12}v^1T^2 + p_{03}v^0T^3 + p_{40}v^4T^0 + p_{31}v^3T^1 + p_{22}v^{22}T^2 + p_{13}v^1T^3 + p_{04}v^0T^4 + p_{50}v^5T^0 + p_{41}v^4T^1 + p_{32}v^3T^2 + p_{23}v^2T^3 + p_{14}v^1T^4 + p_{05}v^0T^5$.

5. Method according to one of claims 1 to 4, **characterised in that** the relative velocities (v) are in each case ascertained by means of a second formation rule $v = \frac{v_M - v^-}{\sigma_v}$ consisting of an instantaneous relative velocity $v_M$, a relative velocity average value $v^-$ over a defined number of relative velocity values as well as a relative velocity standard deviation $\sigma_v$ over the defined number of relative velocity values as standardised relative velocities v.

6. Method according to one of claims 1 to 5, **characterised in that** the temperatures T are in each case ascertained by means of a third formation rule $T = \frac{T_M - T^-}{\sigma_T}$ consisting of an instantaneous temperature $T_M$, a temperature average value $T^-$ over a defined number of temperature values as well as a temperature standard deviation $\sigma_T$ over the defined number of temperature values as standardised temperatures T.

7. Method according to one of claims 1 to 6, **characterised in that** value ranges (18) for the relative velocities v and for the temperatures T are delimited by means of at least one first straight line (19), defined by a fourth formation rule $v_{G1} = k \cdot T + d$ for a first limit relative velocity $v_{G1}$, wherein a first parameter k and a second parameter d are ascertained from relative velocity values captured during the trials or the brake measurement runs and values for the temperatures T, which are ascertained from measurements during the trials or the brake measurement runs or from a temperature simulation.

8. Method according to one of claims 1 to 7, **characterised in that** value ranges (18) for the relative velocities (v) are delimited by means of at least one second limit relative velocity ($v_{G2}$).

9. Method according to one of claims 1 to 8, **characterised in that** value ranges (18) for the temperatures (T) are delimited by means of at least one limit temperature ($T_G$).

10. Method according to one of claims 2 to 9, **characterised in that** instances of braking the vehicle are controlled or regulated as a function of the ascertained coefficients of friction ($\mu$).

11. Method according to claim 10, **characterised in that** the instances of braking the vehicle are controlled or regulated with a constant deceleration.

**Revendications**

1. Procédé de détermination de coefficients de frottement entre des partenaires de frottement d'un frein, dans lequel les coefficients de frottement sont déterminés à partir de vitesses relatives v entre les partenaires de frottement, de températures $T$ au contact entre les partenaires de frottement et de constantes p définies de manière expérimentale, **caractérisé en ce que** les coefficients de frottement ($\mu$) sont déterminés à partir d'opérandes $s = p_{jj}v^iT^j$ avec un premier numérateur i et un second numérateur j, dans lequel les constantes p sont déterminées à l'avance à partir d'essais sur un banc d'essai de freinage ou à partir de courses de mesure de freinage avec un véhicule de référence et les essais ou les courses de mesure de freinage sont mi(se)s en oeuvre avec des forces de pression (F) définies d'un premier partenaire de frottement contre un second partenaire de frottement, dans lequel les constantes p sont déterminées par l'intermédiaire de comparaisons (10) entre des coefficients de frottement d'essai ($\mu_v$), déterminés à partir des essais ou des courses de mesure de freinage, et des polynômes de n-ième degré formés à partir des opérandes s, dans lequel des valeurs allant de zéro à n sont associées au premier numérateur i et des valeurs allant de zéro à n sont associées au second numérateur j, et dans lequel, au sein des opérandes s, des valeurs de vitesse relative déterminées à partir des essais ou des courses de mesure de freinage sont utilisées pour les vitesses relatives v et des valeurs de mesure de température ou des valeurs de température issues d'une simulation de température sont utilisées pour les températures T.

**2.** Procédé selon la revendication 1, **caractérisé en ce que** les coefficients de frottement ($\mu$) sont déterminés à partir de polynômes de n-ième degré au moyen d'un dispositif de calcul (12) à bord d'un véhicule pendant le fonctionnement dudit véhicule, dans lequel des valeurs allant de zéro à n sont associées au premier numérateur (i) et des valeurs allant de zéro à n sont associées au second numérateur (j), dans lequel, au sein des opérandes (s), les valeurs qui ont été déterminées au moyen des essais ou des courses de mesure de freinage sont utilisées pour les constantes (p), des valeurs de vitesse relative déterminées en fonctionnement sont utilisées pour les vitesses relatives (v), et des valeurs de mesure de température ou des valeurs de température issues d'une simulation de température sont utilisées pour les températures (T).

**3.** Procédé selon la revendication 1 ou 2, **caractérisé en ce que** les polynômes présentent un degré n égal à cinq.

**4.** Procédé selon la revendication 3, **caractérisé en ce que** les coefficients de frottement ($\mu$) sont déterminés au moyen d'une première prescription de formation $\mu = p_{00}v^0T^0 + p_{10}v^1T^0 + p_{01}v^0T^1 + p_{20}v^2T^0 + p_{11}v^1T^1 + p_{02}v^0T^2 + p_{30}v^3T^0 + p_{21}v^2T^1 + p_{12}v^1T^2 + p_{03}v^0T^3 + p_{40}v^4T^0 + p_{31}v^3T^1 + p_{22}v^2T^2 + p_{13}v^1T^3 + p_{04}v^0T^4 + p_{50}v^5T^0 + p_{41}v^4T^1 + p_{32}v^3T^2 + p_{23}v^2T^3 + p_{14}v^1T^4 + p_{05}v^0T^5$.

**5.** Procédé selon l'une quelconque des revendications 1 à 4, **caractérisé en ce que** les vitesses relatives (v) sont déterminées sous forme de vitesses relatives normalisées v respectivement au moyen d'une deuxième prescription de formation $v = \frac{v_M - v^-}{\sigma_v}$ à partir d'une vitesse relative instantanée $v_M$, d'une valeur moyenne de vitesse relative $v^-$ établie à partir d'un nombre défini de valeurs de vitesse relative, et d'un écart-type de vitesse relative $\sigma_v$ établi à partir du nombre défini de valeurs de vitesse relative.

**6.** Procédé selon l'une quelconque des revendications 1 à 5, **caractérisé en ce que** les températures T sont déterminées sous forme de températures normalisées T respectivement au moyen d'une troisième prescription de formation $T = \frac{T_M - T^-}{\sigma_T}$ à partir d'une température instantanée $T_M$, d'une valeur moyenne de température $T^-$ établie à partir d'un nombre défini de valeurs de température, et d'un écart-type de température $\sigma_T$ établi sur le nombre défini de valeurs de température.

**7.** Procédé selon l'une quelconque des revendications 1 à 6, **caractérisé en ce que** des plages de valeurs (18) destinées aux vitesses relatives v et aux températures T sont limitées au moyen d'au moins une première droite (19), de manière définie par une quatrième prescription de formation $v_{G1} = k \cdot T + d$ pour une première vitesse relative limite $v_{G1}$, dans lequel un premier paramètre k et un second paramètre d sont déterminés à partir de valeurs de vitesse relative enregistrées pendant les essais ou les courses de mesure de freinage et de valeurs des températures T déterminées à partir de mesures pendant les essais ou les courses de mesure de freinage ou à partir d'une simulation de température.

**8.** Procédé selon l'une quelconque des revendications 1 à 7, **caractérisé en ce que** des plages de valeurs (18) destinées aux vitesses relatives (v) sont limitées au moyen d'au moins une second vitesse relative limite ($v_{G2}$).

**9.** Procédé selon l'une quelconque des revendications 1 à 8, **caractérisé en ce que** des plages de valeurs (18) destinées aux températures (T) sont limitées au moyen d'au moins une température limite ($T_G$).

**10.** Procédé selon l'une quelconque des revendications 2 à 9, **caractérisé en ce que** des freinages du véhicule sont commandés ou régulés en fonction des coefficients de frottement ($\mu$) déterminés.

**11.** Procédé selon la revendication 10, **caractérisé en ce que** les freinages du véhicule sont commandés ou régulés avec une décélération constante.

FIG 1

FIG 2

FIG 3

F M v T

10

11

13

14

15

16

17

FIG 4

v

20

18

19

21

T

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016115275 A1

- WO 2005058665 A1